# FASCICULE DE BREVET EUROPEEN

(11) **EP 3 019 708 B1**
(45) Date de publication et mention de la délivrance du brevet: **30.08.2017**
(21) Numéro de dépôt: 14749919.8
(22) Date de dépôt: 09.07.2014
(51) Int. Cl.: F01D 15/10, F02C 7/32, F16H 1/28

(54) **STRUCTURE COMPACTE DE BOITIER D'ENTRAINEMENT POUR TURBOMACHINE D'AERONEF**
KOMPAKTE STRUKTUR FÜR EIN HILFSGETRIEBE EINES FLUGZEUGTURBINENTRIEBWERKS
COMPACT STRUCTURE FOR ACCESSORY GEARBOX OF AN AIRCRAFT TURBINE ENGINE

(30) Priorité: 10.07.2013 FR 1356788
(43) Date de publication de la demande: 18.05.2016
(73) Titulaire: Safran Transmission Systems, 92700 Colombes (FR)
(72) Inventeur: PRUNERA-USACH, Stéphane, 77550 Moissy Cramayel (FR); BECK, Guillaume, F-60500 Chantilly (FR); PELTIER, Jordane, F-77550 MOISSY CRAMAYEL (FR)
(74) Mandataire: Brevalex
(86) Numéro de dépôt international: PCT/FR2014/051758
(87) Numéro de publication internationale: WO 2015/004385

(56) Documents cités:
- EP-A2- 2 405 116
- WO-A1-98/50715
- CH-A- 406 769
- DE-A1- 19 729 620
- US-A- 2 951 631

## Description

### DOMAINE TECHNIQUE ET ART ANTÉRIEUR

La présente invention se rapporte à des chaînes d'engrenages (ou chaînes d'entraînement) présentes dans les aéronefs.

Ces chaînes d'engrenages permettent de transmettre de l'énergie mécanique entre des organes moteurs, par exemple un démarreur ou un compresseur de turbomachine et des organes esclaves, par exemple des équipements de type générateur électrique ou pompe hydraulique, ou encore le compresseur de turbomachine lui-même lors de sa phase de démarrage, lorsqu'il est entraîné en rotation par le démarreur. Le boîtier d'entraînement pour équipements ou encore AGB (de l'acronyme anglais « Accessory Gear Box ») est un exemple particulier de chaîne d'engrenages pour l'entraînement d'équipements. Une structure de boîtier d'entraînement pour équipements de ce type est décrite dans la demande de brevet américaine US 2012/0006137.

Une fonction multiplicatrice ou réductrice permet généralement d'adapter la vitesse de rotation du mouvement d'entrée aux paramètres spécifiques à chaque organe moteur ou organe esclave.

Par exemple, un démarreur comporte deux parties : un organe mobile nommé rouet, et un réducteur.

Toutefois, dans certains cas spécifiques, l'organe moteur et l'organe esclave doivent être découplés. Par exemple, la fonction même d'un démarreur est d'assister le démarrage de la turbomachine. Lorsque la turbomachine atteint un régime de rotation souhaité, le démarreur doit être débrayé.

L'invention vise à proposer une structure compacte intégrant une fonction multiplicatrice ou réductrice et qui soit débrayable afin de limiter l'encombrement de la chaîne d'entraînement et/ou des équipements.

WO 98/50715 A1 décrit un dispositif conforme un préambule de la revendication indépendante.

### EXPOSÉ DE L'INVENTION

L'invention porte ainsi sur une chaîne d'entraînement pour aéronef, par exemple une chaîne d'entraînement d'équipements pour turbomachine, comprenant une pluralité de pignons principaux engrenant les uns avec les autres, un premier pignon principal comportant une paroi délimitant un volume intérieur, une denture extérieure étant ménagée sur une surface extérieure de la paroi, la denture extérieure engrenant avec au moins un deuxième pignon principal, un système d'engrenages distinct de la pluralité de pignons principaux étant intégré dans le volume intérieur, le premier pignon principal et le système d'engrenages étant conjointement configurés pour former multiplicateur ou réducteur et pour assurer un transfert d'énergie mécanique entre un organe moteur et un organe esclave, ledit système d'engrenages étant monté par l'intermédiaire d'un organe de désaccouplement sur la paroi.

L'invention porte aussi par exemple sur une chaîne d'entraînement pour aéronef, par exemple une chaîne d'entraînement d'équipements pour turbomachine, la chaîne d'entraînement comprenant une pluralité de pignons engrenant les uns avec les autres, la chaîne d'entraînement comportant également une deuxième pluralité de pignons formant système d'engrenages, ainsi qu'un organe de désaccouplement, la première pluralité de pignons et la deuxième pluralité de pignons étant reliés par l'intermédiaire de l'organe de désaccouplement, un premier pignon de la première pluralité de pignons comportant une paroi délimitant un volume intérieur, une denture extérieure étant ménagée sur une surface extérieure de la paroi, la denture extérieure engrenant avec au moins un deuxième pignon de la première pluralité de pignons, le système d'engrenages étant intégré dans le volume intérieur, le premier pignon et le système d'engrenages étant conjointement configurés pour former multiplicateur ou réducteur et pour assurer un transfert d'énergie mécanique entre un organe moteur et un organe esclave, ledit système d'engrenages étant monté par l'intermédiaire d'un organe de désaccouplement sur la paroi.

Ledit système d'engrenages comporte un organe formant couronne, au moins deux pignons satellites, un organe formant porte-satellites et une denture solaire, la denture solaire étant ménagée sur un premier arbre relié à l'organe moteur ou à l'organe esclave, une denture intérieure étant ménagée sur une surface intérieure de l'organe formant couronne, les pignons satellites engrenant avec la denture intérieure et avec la denture solaire.

Et l'organe formant couronne comporte une jante sur laquelle une piste intérieure de l'organe de désaccouplement est ménagée, l'organe formant porte-satellites étant fixe par rapport à un bâti de l'aéronef.

Alternativement, l'organe formant couronne comporte une paroi annulaire fixe par rapport à un bâti de l'aéronef, l'organe formant porte-satellites comportant une jante sur laquelle une piste intérieure de l'organe de désaccouplement est ménagée.

Ainsi, l'invention permet d'intégrer et d'associer une structure de multiplicateur (et/ou de réducteur) et un organe de désaccouplement d'un organe moteur ou esclave d'aéronef dans le volume intérieur d'un pignon de chaîne d'engrenages d'aéronef plutôt que dans le volume intérieur de l'organe moteur ou esclave lui-même. Ceci permet une réduction du volume de cet équipement et de la masse qui se trouve en porte-à-faux. Il en résulte avantageusement d'une part une diminution des contraintes sur les brides de support de cet organe et d'autre part une optimisation du volume interne du module dans lequel la chaîne d'engrenages est montée. En outre, cette intégration se fait dans le volume délimité par le pignon sans augmentation du volume de la chaîne d'entraînement.

Dans le cas spécifique d'une AGB, la diminution du volume des équipements facilite l'intégration de celui-ci dans la turbomachine.

En outre, l'organe de désaccouplement permet à un organe moteur ou esclave de ne fonctionner que sous certaines conditions de rotation en entrée de mouvement et en sortie de mouvement. Par exemple, un démarreur de turbomachine d'aéronef dont le multiplicateur est intégré dans un pignon de la façon décrite ci-dessus pourra avantageusement ne fonctionner qu'au démarrage de la turbomachine.

Selon une caractéristique avantageuse, une entrée de mouvement vers le premier pignon principal se fait par la denture extérieure.

Alternativement, une entrée de mouvement vers le pignon principal se fait par le premier arbre.

Selon une caractéristique avantageuse, l'organe de désaccouplement est configuré pour permettre un découplage en rotation du système d'engrenage et du premier pignon principal lorsque la vitesse de rotation du premier pignon principal est supérieure à la vitesse de rotation de l'organe formant couronne ou par désengagement du à la force centrifuge lorsque la vitesse de rotation du pignon atteint une valeur définie.

Selon un mode de réalisation particulier, l'organe de désaccouplement comporte un dispositif à roue libre.

Dans un mode de réalisation particulier, les pignons satellites du système d'engrenages ont chacun une première et une deuxième denture de diamètres différents.

Une telle double denture offre avantageusement une plage de rapports de transmission importante dans un encombrement minimal.

Dans un mode de réalisation particulier, ledit premier pignon principal comporte un deuxième arbre qui est coaxial au premier arbre.

L'invention permet ainsi avantageusement de positionner en face l'un de l'autre deux équipements tournant à des vitesses très différentes en fonction du dimensionnement du pignon d'une part et du multiplicateur d'autre part.

Dans une configuration particulière, le premier pignon principal fait partie d'un couple conique.

Il est par exemple possible que le premier pignon principal d'une AGB soit le pignon le plus proche de l'arbre de compresseur.

La chaîne d'entraînement décrit ci-dessus est par exemple destinée à un dispositif d'entraînement de type AGB, PGB (Power Gearbox), RGB (Reduction Gearbox), RAT (Ram Air Turbine) ou APU (Auxiliary Power Unit).

L'invention peut également porter sur un boîtier d'entraînement pour équipements comportant une chaîne d'entraînement telle que décrite ci-dessus.

L'invention peut encore porter sur un boîtier d'entraînement pour hélice comportant une chaîne d'entraînement telle que décrite ci-dessus.

### BRÈVE DESCRIPTION DES DESSINS

On décrira à présent, à titre d'exemples non limitatifs, des modes de réalisation de l'invention, en se référant aux dessins annexés, dans lesquels :
- les figures 1A et 1B sont des coupes en perspective montrant d'une part un pignon présentant un logement interne, et d'autre part un dispositif combinant ce pignon, un organe de désaccouplement et un multiplicateur intégré dans le logement interne (le multiplicateur et l'organe de désaccouplement étant ici schématisés par un bloc) ;
- les figures 2A et 2B sont des schémas cinématiques illustrant deux possibilités d'intégration du pignon des figures 1A et 1B dans différentes chaînes d'engrenages à l'exemple de deux AGB, le multiplicateur et l'organe de désaccouplement n'étant pas représentés ;
- la figure 3 est une coupe en perspective détaillant un premier mode de réalisation du dispositif de la figure 1B et montrant le multiplicateur intégré dans le logement interne du pignon par l'intermédiaire de l'organe de désaccouplement ;
- la figure 4 est un schéma cinématique illustrant les interactions entre les éléments du dispositif de la figure 3 ;
- la figure 5 est un schéma cinématique illustrant les interactions entre les éléments d'un deuxième mode de réalisation du dispositif de la figure 1B.

### EXPOSÉ DÉTAILLÉ DE MODES DE RÉALISATION PARTICULIERS

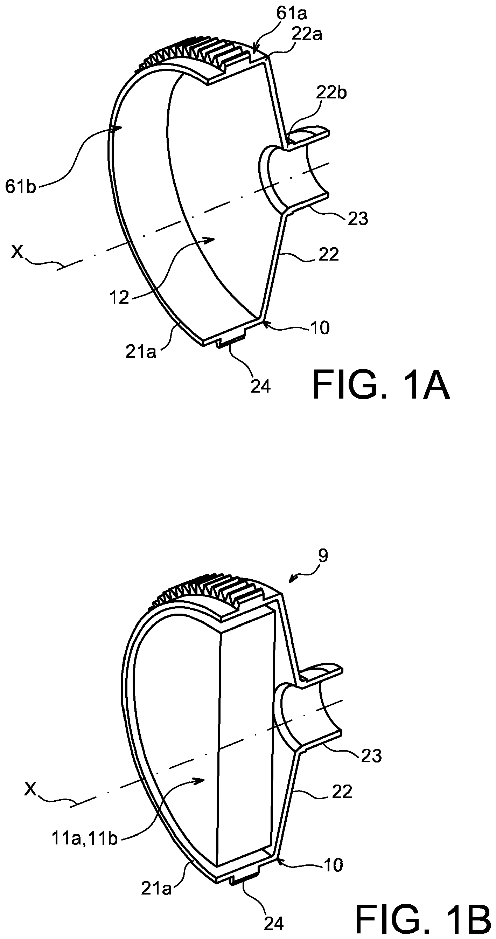

La figure 1A illustre un pignon 10 de forme globale en entonnoir et d'orientation longitudinale X.

Le pignon 10 comporte une jante annulaire 21a, un voile 22, un fût 23 et une denture extérieure 24.

La jante 21a et le fût 23 sont cylindriques, coaxiaux et de section circulaire, le diamètre du fût 23 étant inférieur au diamètre de la jante 21a. Le fût 23 est ici un arbre creux. Alternativement, le fût 23 est un arbre plein.

Le voile 22 est ici de forme tronconique. Le voile 22 est rattaché par un premier bord circulaire 22a à un bord d'extrémité de la jante 21a, et par un deuxième bord circulaire 22b, de diamètre inférieur au premier bord 22a, à un bord d'extrémité du fût 23. En variante non représentée, le voile 22 est plat. Le voile 22 peut aussi comporter des ouvertures sur une partie de sa surface.

La jante 21a et le voile 22 délimitent conjointement un logement interne 12.

Le fût 23 s'étend du voile 22 à l'opposé du logement interne 12.

La denture extérieure 24 s'étend radialement de la jante 21a vers l'extérieur. La denture 24 comporte ici des dents droites. Dans une variante non représentée, cette denture est hélicoïdale ou d'un autre type.

La figure 1B illustre un dispositif mécanique 9 dans lequel un multiplicateur 11a et un organe de désaccouplement 11b sont montés dans le logement interne 12 du pignon 10 décrit ci-dessus. En figure 1B, le multiplicateur 11a et l'organe de désaccouplement 11b sont représentés sous forme simplifiée, par un demi-cylindre.

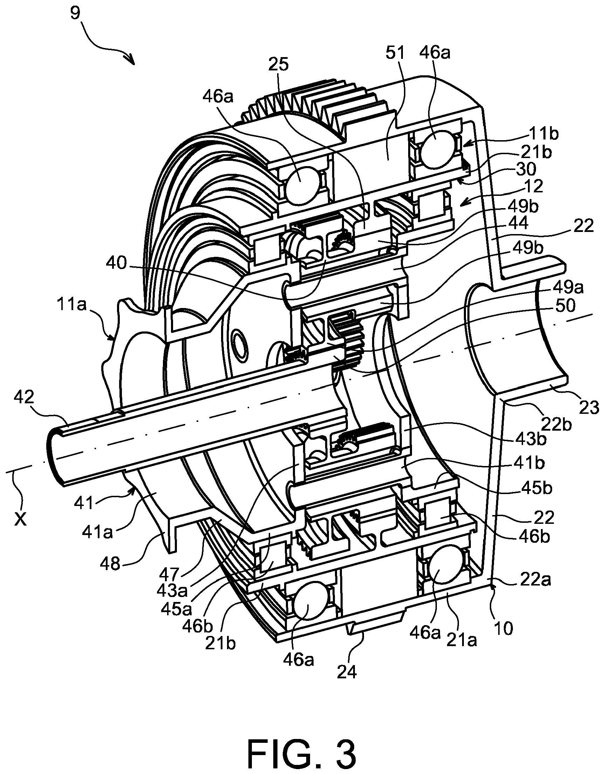

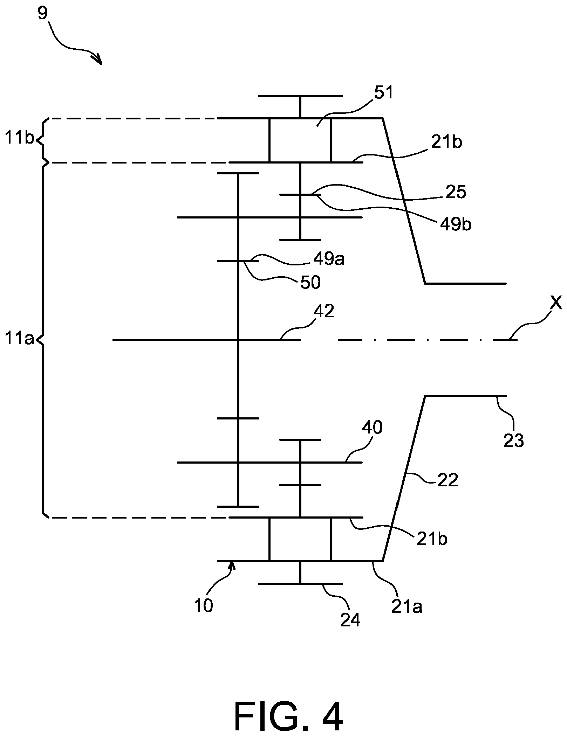

Dans le dispositif 9 détaillé en figures 3 et 4, le multiplicateur 11a comporte une couronne 30, des pignons satellites 40 (ou satellites), un porte-satellites 41 et un arbre 42.

La couronne 30 comporte une jante annulaire 21b et une denture intérieure 25. La jante 21b est de section circulaire. La denture 25 s'étend radialement sur la face interne de la jante 21b. La denture 25 comporte ici des dents droites. Dans une variante non représentée, cette denture est hélicoïdale ou d'un autre type.

Les satellites 40 sont ici des pignons à double denture droite 49a et 49b. Plus précisément, les satellites 40 comportent deux dentures externes distinctes, l'une 49a étant ici de diamètre supérieur à l'autre 49b. Les satellites 40 sont ici au nombre de quatre. En variante non représentée, les dentures 49a et 49b sont hélicoïdales ou d'un autre type, et/ou le nombre de pignons satellites 40 est différent de quatre, par exemple deux ou trois.

Ici, la denture 49b est engrenée avec la denture 25 de la couronne 30.

Dans le mode de réalisation représenté, le porte-satellites 41 comporte deux coques 41a et 41b et quatre arbres 44.

La première coque 41a, la plus éloignée du voile 22, comporte une paroi 43a, une portion cylindrique 45a, une portion tronconique 47 et une bride 48. La paroi 43a est un flasque plat. La portion cylindrique 45a s'étend longitudinalement depuis la paroi 43a, à l'opposé du fût 23. La portion tronconique 47 s'étend en rétrécissant dans le prolongement de la portion cylindrique 45a. Enfin, la bride 48 du porte-satellites 41 est disposée à l'extrémité distale de la portion tronconique 47, transversalement à l'orientation longitudinale X. La bride 48 assure un maintien en position du porte-satellites 41 par rapport à une armature fixe, par exemple l'un des boîtiers d'entrainement 4a ou 4b.

La deuxième coque 41b, la plus proche du voile 22, comporte une paroi 43b et une portion cylindrique 45b. La paroi 43b est un flasque plat. En variante, les parois 43a et/ou 43b ont des formes différentes de celle représentée. Par exemple, l'une ou l'autre peut comporter des jours ou être différente d'un élément plat. La portion cylindrique 45b s'étend longitudinalement depuis la paroi 43b, en direction du fût 23.

Deux paliers 46b, ici des roulements à rouleaux, assurent une liaison mécanique à rotation entre la jante 21b de la couronne 30 et les portions cylindriques 45a et 45b.

Les parois 43a et 43b sont parallèles entre elles. Ces parois 43a et 43b supportent conjointement les arbres 44 sur lesquels sont montés les pignons satellites 40, mobiles à rotation.

L'arbre 42 présente une denture droite 50 en une extrémité logée dans le porte-satellites 41. Dans une version non représentée, cette denture est hélicoïdale ou d'un autre type. Cette denture 50 est engrenée avec la denture 49a de chacun des quatre satellites 40. L'arbre 42 est ici prévu coaxial avec le fût 23 et la jante 21a.

L'organe de désaccouplement 11b comporte ici un dispositif à roue libre 51 et deux paliers 46a, ici des roulements à billes.

Le dispositif à roue libre 51 et les deux roulements 46a sont intercalés entre la jante 21a du pignon 10 et la jante 21b de la couronne 30, le dispositif à roue libre 51 étant disposé entre les deux roulements 46a.

Le dispositif à roue libre 51 est représenté en figures 3 et 4 sous forme simplifiée, par un bloc annulaire. D'une manière générale, le dispositif à roue libre 51 comporte deux pistes annulaires. La piste extérieure est ménagée dans la jante 21a ou dans un anneau distinct monté dans la jante 21a. La piste intérieure est ménagée dans la jante 21b ou dans un anneau distinct monté autour de la jante 21b.

Dans le cas particulier et non limitatif d'un démarreur de turbomachine d'aéronef, au démarrage de l'aéronef, la puissance va tout d'abord d'une turbine du démarreur vers le moteur de l'aéronef par l'intermédiaire d'une AGB. Le dispositif de roue libre 51 est engagé car le couple est transmis depuis la couronne 30 vers le pignon principal 10. Une fois le moteur démarré, le dispositif à roue libre 51 permet de découpler en rotation la couronne 30 et le pignon 10 :
- lorsque le sens de transmission du couple s'inverse jusqu'à ce que le couple soit transmis du moteur de l'aéronef au démarreur, ou bien
- par désengagement du à la force centrifuge lorsque la vitesse de rotation du pignon 10 atteint une valeur définie.

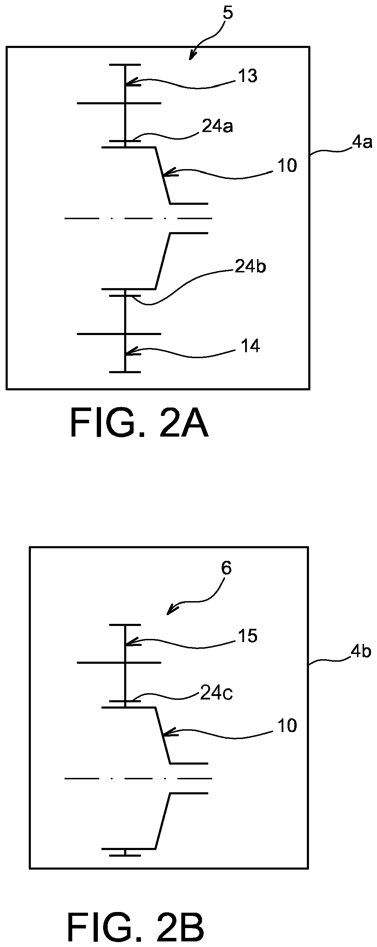

Comme il est visible aux figures 2A et 2B, le pignon 10 peut être intégré de différentes manières dans une chaîne d'engrenages (ou chaîne cinématique).

En figure 2A, le pignon 10 est monté dans une première chaine cinématique 5 d'un boîtier d'entraînement 4a. Plus précisément, le pignon 10 est engrené en amont en 24a avec une roue dentée 13 et en aval 24b avec une roue dentée 14. Par le terme amont, on comprend que la roue dentée 13 est, au sein de la chaîne cinématique 5, la plus proche d'un arbre de compresseur depuis lequel on prélève un mouvement mécanique. La mise en rotation de la roue dentée 13 entraîne ainsi le pignon 10 et la roue dentée 14 montés en aval.

En figure 2B, le pignon 10 est monté dans une deuxième chaîne cinématique 6 d'un boîtier d'entraînement 4b. Ici, le pignon 10 est engrené en 24c avec une roue dentée 15 et est monté en fin de chaîne cinématique 6.

En variante, l'entrée de mouvement dans le boîtier d'entraînement 4a depuis l'arbre de compresseur se fait par le pignon 10, c'est-à-dire que le pignon 10 apporte la puissance aux chaines d'engrenages 5 ou 6 comportant respectivement les pignons 13 et 14 (figure 2A) ou 15 (figure 2B).

Les exemples des figures 2A et 2B ne sont pas limitatifs et le pignon 10 peut être monté en différents emplacements dans une chaîne cinématique ou encore dans une chaîne cinématique différente de celles représentées en figures 2A et 2B.

En variante non représentée, le pignon fait partie d'un couple conique et la denture extérieure est par exemple formée sur une jante conique ou tronconique.

Le pignon 10 peut être maintenu en position par rapport à une armature fixe de l'aéronef par une bride montée sur le fût 23 par l'intermédiaire un palier, par exemple un roulement à rouleaux ou un palier lisse (l'armature fixe, la bride et le palier n'étant pas représenté ici).

Le dispositif 9 représenté en figures 3 et 4 peut être utilisé aussi bien comme multiplicateur que comme réducteur selon que la partie amont de l'entraînement se trouve du côté du fût 23, de la denture 24 ou de l'arbre 42.

Le multiplicateur 11a se présente ici sous forme d'un train planétaire double (c'est-à-dire comportant des satellites 40 à deux dentures 49a et 49b) dans lequel la couronne 30 est le planétaire extérieur via la denture intérieure 25 et dans lequel la denture 50 disposée sur l'arbre 42 joue le rôle de planétaire intérieur mobile (ou solaire), le porte-satellites 41 étant fixé à une armature fixe. L'utilisation de satellites à double denture permet de réaliser une plage de rapports de transmission plus importante qu'avec des pignons simples. Néanmoins, l'invention couvre aussi la mise en oeuvre de pignons satellites sous forme de pignons simples, c'est-à-dire ayant une même denture engrenée à la fois avec la couronne et la denture 50 de l'arbre 42.

L'invention permet par ailleurs avantageusement de positionner en face l'un de l'autre deux organes tournant à des vitesses très différentes, l'un étant connecté en rotation avec l'arbre 42, l'autre avec le fût 23 ou avec un arbre relié au fût 23.

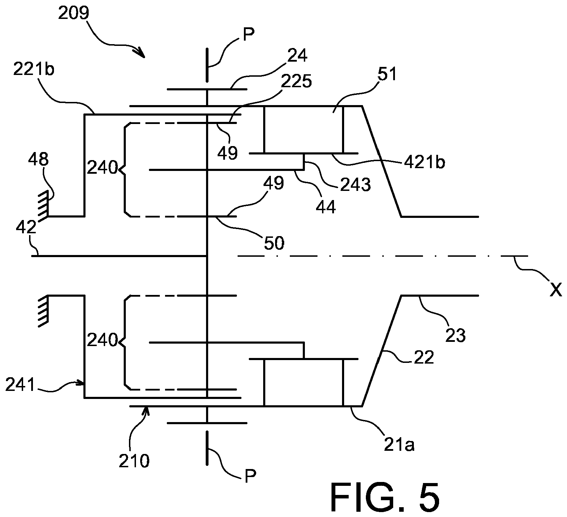

Le dispositif 209 schématisé en figure 5 est une alternative au dispositif 9 décrit en référence aux figures 3 et 4. Les parties communes aux dispositifs 9 et 209 portent les mêmes références et ne sont pas décrites de nouveau.

Le dispositif 209 comporte un pignon 210, une couronne 241 et une paroi 243.

La paroi 243 forme un porte-satellites sur laquelle les arbres 44 et donc les pignons satellites 40 sont montés. La paroi 243 présente une jante 421b sur laquelle est ménagée une piste intérieure du dispositif à roue libre 51.

La couronne 241 présente une portion annulaire 221b coaxiale avec la jante 21a du pignon 210. Cette portion annulaire 221b porte une denture intérieure 225 qui engrène avec les dentures 49. La couronne 241 est ici fixée à une armature du boîtier d'entraînement fixe via une bride 48.

Le dispositif 209 représenté en figure 5 se présente sous forme d'un train épicycloïdal simple dans lequel le pignon 210 joue le rôle de porte-satellites mobile par l'intermédiaire du système de roue libre 51.

En référence aux figures 2A et 2B, les chaînes d'engrenages 5 et 6 ont été décrites montées dans un boîtier d'entraînement pour équipements 4a ou 4b (ou AGB). Alternativement, un boîtier d'entraînement pour hélice (« PGB » ou « Propeller Gearbox ») comporte une chaîne d'engrenages telle que 5 ou 6. Dans ce cas, par exemple, l'entrée de couple se fait par le fût 23, l'hélice est montée sur l'arbre 42 et des équipements sont alimentés par l'intermédiaire de la denture 24. Alternativement encore, un groupe auxiliaire de puissance (en anglais « APU » ou « Auxiliary Power Unit ») ou module à éolienne de secours (en anglais « RAT » ou « Ram Air Turbine » comportent une chaîne d'engrenages 5 ou 6 et lui fournissent un couple.

On note que l'invention ne se limite pas aux démarreurs d'aéronefs mais peut s'appliquer à tout dispositif mécanique mettant en oeuvre un pignon et un dispositif multiplicateur ou réducteur et nécessitant un désaccouplement entre ces deux éléments sous certaines conditions de rotation.

## Revendications

1. Chaîne d'entraînement pour aéronef comprenant une pluralité de pignons principaux (10 ; 13, 14 ; 15) engrenant les uns avec les autres, un premier pignon principal (10) comportant une paroi (21a, 22) délimitant un volume intérieur (12), une denture extérieure (24) étant ménagée sur une surface extérieure de la paroi (21a, 22), la denture extérieure (24) engrenant avec au moins un deuxième pignon principal (13, 14 ; 15), un système d'engrenages (11a) étant intégré dans le volume intérieur (12), le premier pignon principal (10) et le système d'engrenages (11a) étant conjointement configurés pour former multiplicateur ou réducteur et pour assurer un transfert d'énergie mécanique entre un organe moteur et un organe esclave ; dans laquelle le système d'engrenages (11a) comporte un organe formant couronne (30 ; 241), au moins deux pignons satellites (40), un organe formant porte-satellites (41 ; 243) et une denture solaire (50), la denture solaire (50) étant ménagée sur un premier arbre (42) relié à l'organe moteur ou à l'organe esclave, une denture intérieure (25 ; 225) étant ménagée sur une surface intérieure de l'organe formant couronne (30 ; 241), les pignons satellites (40) engrenant avec la denture intérieure (25 ; 225) et avec la denture solaire (50) ; **caractérisée en ce que** ledit système d'engrenages (11a) est monté par l'intermédiaire d'un organe de désaccouplement (11b) sur la paroi (21a, 22) ; et soit l'organe formant couronne (30) comporte une jante (21b) sur laquelle une piste intérieure de l'organe de désaccouplement (11b) est ménagée, et l'organe formant porte-satellites (41) est fixe par rapport à un bâti de l'aéronef, soit l'organe formant couronne (241) comporte une paroi annulaire (221b) fixe par rapport à un bâti de l'aéronef, et l'organe formant porte-satellites (243) comporte une jante (421b) sur laquelle une piste intérieure de l'organe de désaccouplement (11b) est ménagée.

2. Chaîne d'entraînement selon la revendication précédente, une entrée de mouvement vers le premier pignon principal (10) se faisant par la denture extérieure (24).

3. Chaîne d'entraînement selon la revendication 1, une entrée de mouvement vers le pignon principal (10) se faisant par le premier arbre (42).

4. Chaîne d'entraînement selon la revendication 1, l'organe de désaccouplement (11b) étant configuré pour permettre un découplage en rotation du système d'engrenages (11a) et du premier pignon principal (10) lorsque la vitesse de rotation du premier pignon principal (10) est supérieure à la vitesse de rotation de l'organe formant couronne (30) ou par désengagement dû à la force centrifuge lorsque la vitesse de rotation du pignon (10) atteint une valeur définie.

5. Chaîne d'entraînement selon la revendication précédente, l'organe de désaccouplement (11b) comportant un dispositif à roue libre (51).

6. Chaîne d'entraînement selon l'une des revendications 1 à 3, les pignons satellites (40) du système d'engrenages (11a) ayant chacun une première (49a) et une deuxième denture (49b) de diamètres différents.

7. Chaîne d'entraînement selon la revendication 4, ledit premier pignon principal comportant un deuxième arbre (23) qui est coaxial au premier arbre (42).

8. Chaîne d'entraînement selon l'une quelconque des revendications précédentes, le premier pignon principal (10) faisant partie d'un couple conique.

9. Chaîne d'entraînement selon l'une des revendications 1 à 8, destinée à un dispositif d'entraînement de type AGB, PGB, RGB, RAT ou APU.

10. Boîtier d'entraînement pour équipements (de type AGB) comportant une chaîne d'entraînement selon l'une des revendications 1 à 8.

11. Boîtier d'entraînement pour hélice (de type PGB) comportant une chaîne d'entraînement selon l'une des revendications 1 à 8.

## Patentansprüche

1. Antriebskette für ein Luftfahrzeug, umfassend eine Vielzahl von miteinander kämmenden Hauptritzeln (10; 13, 14; 15), wobei ein erstes Hauptritzel (10) eine einen Innenraum (12) begrenzende Wand (21a, 22) aufweist, wobei eine Außenverzahnung (24) auf einer Außenfläche der Wand (21a, 22) ausgebildet ist, wobei die Außenverzahnung (24) mit wenigstens einem zweiten Hauptritzel (13, 14; 15) kämmt, wobei ein Getriebesystem (11a) in den Innenraum (12) integriert ist, wobei das erste Hauptritzel (10) und das Getriebesystem (11a) gemeinsam dazu ausgelegt sind, ein Übersetzungs- oder Untersetzungsgetriebe zu bilden und eine mechanische Energieübertragung zwischen einem Antriebsorgan und einem Slave-Organ sicherzustellen, wobei das Getriebesystem (11a) ein einen Kranz bildendes Organ (30; 241), wenigstens zwei Planetenräder (40), ein einen Planetenträger bildendes Organ (41; 243) und eine Sonnenverzahnung (50) umfasst, wobei die Sonnenverzahnung (50) an einer ersten Welle (42), welche mit dem Antriebsorgan oder mit dem Slave-Organ verbunden ist, ausgebildet ist, wobei eine Innenverzahnung (25; 225) auf einer Innenfläche des einen Kranz bildenden Organs (30; 241) ausgebildet ist, wobei die Planetenräder (40) mit der Innenverzahnung (25; 225) und mit der Sonnenverzahnung (50) kämmen, **dadurch gekennzeichnet, dass** das Getriebesystem (11a) mittels eines Auskupplungsorgans (11b) an der Wand (21a, 22) angebracht ist und entweder das einen Kranz bildende Organ (30) eine Felge (21b) umfasst, an der eine Innenspur des Auskupplungsorgans (11b) ausgebildet ist und das einen Planetenträger bildende Organ (41) gegenüber einem Rahmen des Luftfahrzeugs fest ist, oder das einen Kranz bildende Organ (241) eine ringförmige Wand (221b) umfasst, die gegenüber einem Rahmen des Luftfahrzeugs fest ist und das einen Planetenträger bildende Organ (243) eine Felge (421b) umfasst, an der eine Innenspur des Auskupplungsorgans (11b) ausgebildet ist.

2. Antriebskette nach dem vorhergehenden Anspruch, wobei ein Bewegungseingang in Richtung des ersten Hauptritzels (10) über die Außenverzahnung (24) erfolgt.

3. Antriebskette nach Anspruch 1, wobei ein Bewegungseingang in Richtung des Hauptritzels (10) über die erste Welle (42) erfolgt.

4. Antriebskette nach Anspruch 1, wobei das Auskupplungsorgan (11b) dazu ausgelegt ist, ein Drehauskuppeln des Getriebesystems (11a) und des ersten Hauptritzels (10) zu ermöglichen, wenn die Rotationsgeschwindigkeit des ersten Hauptritzels (10) höher als die Rotationsgeschwindigkeit des einen Kranz bildenden Organs (30) ist, oder durch durch die Fliehkraft bedingtes Ausrücken, wenn die Rotationsgeschwindigkeit des Ritzels (10) einen definierten Wert erreicht.

5. Antriebskette nach dem vorhergehenden Anspruch, wobei das Auskupplungsorgan (11b) eine Freilaufvorrichtung (51) umfasst.

6. Antriebskette nach einem der Ansprüche 1 bis 3, wobei die Planetenräder (40) des Getriebesystems (11a) jeweils eine erste (49a) und eine zweite (49b) Verzahnung mit unterschiedlichen Durchmessern aufweisen.

7. Antriebskette nach Anspruch 4, wobei das erste Hauptritzel eine zweite Welle (23), welche zu der ersten Welle (42) koaxial ist, umfasst.

8. Antriebskette nach einem der vorhergehenden Ansprüche, wobei das erste Hauptritzel (10) zu einem Kegelräderpaar gehört

9. Antriebskette nach einem der Ansprüche 1 bis 8, die für eine Antriebsvorrichtung vom Typ AGB, PGB, RGB, RAT oder APU gehört.

10. Antriebsgehäuse für Einrichtungen (vom Typ AGB), das eine Antriebskette nach einem der Ansprüche 1 bis 8 umfasst.

11. Antriebsgehäuse für einen Propeller (vom Typ PGB), das eine Antriebskette nach einem der Ansprüche 1 bis 8 umfasst.

## Claims

1. Aircraft drive chain including a plurality of main gears (10; 13; 14; 15) engaging with each other, a first main gear (10) comprising a wall (21a, 22) defining an inner space (12), an outer set of gear teeth (24) being placed on an outer surface of the wall (21a, 22), the outer set of gear teeth (24) engaging with at least one second main gear (13; 14; 15), a gear system (11a) being built into the inner space (12), the first main gear (10) and the gear system (11a) being jointly configured so as to form a speed-increaser or reducer and ensure mechanical power transfer between a drive member and a slave member, wherein the gear system (11a) comprises a member forming a crown (30; 241), at least two planet gears (40), a member forming a planet carrier (41; 243) and a sun gear teeth set (50), the sun gear teeth set (50) being placed on a first shaft (42) connected to the drive member or the slave member, an inner set of gear teeth (25; 225) being placed on an inner surface of the member forming a crown (30; 241), the planet gears (40) engaging with the inner set of gear teeth (25; 225) and with the sun gear teeth set (50) ; **characterised in that** said gear system (11a) is mounted onto the wall (21a, 22) by means of a decoupling member (11b) ; and either the member forming a crown (30) comprises a rim (21b) on which an inner track of the decoupling member (11b) is made, the member forming the planet carrier (41) being fixed with regard to an aircraft frame, either the member forming a crown (241) comprises a ring-shaped wall (221b) that is fixed in relation to an aircraft frame, and the member forming the planet carrier (243) comprises a rim (421b) on which an inner track of the decoupling member (11b) is made.

2. Drive chain according to the previous claim, wherein a movement towards the first main gear (10) is initiated by the outer set of gear teeth (24).

3. Drive chain according to one of claim 1, wherein a movement towards the main gear (10) is initiated by the first shaft (42).

4. Drive chain according to one of claim 1, wherein the decoupling member (11b) is configured to allow for a rotational decoupling of the gear system (11a) and the first main gear (10) when the rotational speed of the first main gear (10) is greater than the rotational speed of the member forming a crown (30) or by disengagement caused by centrifugal force when the rotational speed of the gear (10) reaches a set value.

5. Drive chain according to the previous claim, wherein the decoupling member (11b) comprise an overrunning clutch device (51).

6. Drive chain according to one of claims 1 to 3, wherein the planet gears (40) of the gear system (11a) each have a first (49a) and a second (49b) set of gear teeth of different diameters.

7. Drive chain according to one of claim 4, wherein said first main gear comprises a second shaft (23) that is coaxial to the first shaft (42).

8. Drive chain according to one of the previous claims, wherein the first main gear (10) forms part of a conical pair.

9. Drive chain according to one of claims 1 to 8, intended for an AGB, PGB, RGB, RAT or APU drive device.

10. Accessory gearbox (AGB type) comprising a drive chain according to one of claims 1 to 8.

11. Propeller gearbox (PGB type) comprising a drive chain according to one of claims 1 to 8.
